# DEMANDE DE BREVET EUROPEEN

(11) **EP 4 600 543 A1**
(43) Date de publication de la demande: **13.08.2025**
(21) Numéro de dépôt: 24218295.4
(22) Date de dépôt: 09.12.2024
(51) Int. Cl.: F17C 13/02

(54) **PROCÉDÉ ET DISPOSITIF DE TRANSFERT DE FLUIDE CRYOGÉNIQUE**

(30) Priorité: 07.02.2024 FR 2401183
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: ALLIDIERES, Laurent, 75321 Paris (FR)
(74) Mandataire: Air Liquide

(57) **Abrégé**

L'invention concerne un procédé et un dispositif de transfert de fluide cryogénique liquéfié, par exemple de l'hydrogène liquide, à partir d'un réservoir (1) cryogénique contenant du fluide cryogénique liquéfié ayant une phase gazeuse à l'équilibre avec la phase liquide, le transfert de fluide étant réalisé vers un récepteur au moins en partie par différence de pression entre le réservoir (1) et le récepteur de fluide, le procédé comprenant une étape de pressurisation du fluide contenu dans le réservoir (1), une étape soutirage de liquide du réservoir pressurisé, une étape de mesure du débit volumique de fluide soutiré, une étape de détermination de la masse de liquide soutiré à partir du débit volumique de fluide soutiré mesuré et de la masse volumique du fluide soutiré, la masse volumique du fluide soutiré étant déterminée à partir de la pression du fluide dans le réservoir (1) mesurée avant l'étape de pressurisation.

## Description

L'invention concerne plus particulièrement un procédé de transfert de fluide cryogénique liquéfié, par exemple de l'hydrogène liquide, à partir d'un réservoir cryogénique contenant du fluide cryogénique liquéfié ayant une phase gazeuse à l'équilibre avec la phase liquide, le transfert de fluide étant réalisé vers un récepteur au moins en partie par différence de pression entre le réservoir et le récepteur de fluide, le procédé comprenant une étape de pressurisation du fluide contenu dans le réservoir, une étape soutirage de liquide du réservoir pressurisé, une étape de mesure du débit volumique de fluide soutiré, une étape de détermination de la masse de liquide soutiré à partir du débit volumique de fluide soutiré mesuré et de la masse volumique du fluide soutiré.

La mesure d'un débit d'hydrogène liquide se heurte à plusieurs difficultés. Les débitmètres actuellement utilisés de type à turbine donnent une valeur volumique de débit alors que la facturation de la quantité de liquide est basée sur une masse. Les débitmètres massiques de type Coriolis sont plus coûteux et difficiles à mettre en place dans une enceinte sous vide. De plus, la lecture de débit massique qu'ils fournissent peut être perturbée par la présence de bulles dans le liquide.

Un but de la présente invention est de pallier tout ou partie des inconvénients de l'art antérieur relevés ci-dessus.

A cette fin, le procédé selon l'invention, par ailleurs conforme à la définition générique qu'en donne le préambule ci-dessus, est essentiellement caractérisé en ce que la masse volumique du fluide soutiré est déterminée à partir de la pression du fluide dans le réservoir mesurée avant l'étape de pressurisation.

Par ailleurs, des modes de réalisation de l'invention peuvent comporter l'une ou plusieurs des caractéristiques suivantes :
- le procédé comporte une étape de mesure de la pression du fluide dans le réservoir, une étape de détection d'une hausse de pression correspondant à une étape de pressurisation, la pression du fluide dans le réservoir mesurée avant l'étape de pressurisation étant une valeur de pression mesurée avant la hausse de pression détectée,
- la densité du fluide soutiré est calculée à partir de la formule suivante : D=-2.36P +72.8 (D étant la densité en kg/m3 et P la pression en bar abs) et/ou à partir d'une table déterminée donnant la densité/masse volumique du fluide en fonction de sa pression,
- l'étape de détermination de la masse de liquide soutiré comprend le calcul de ladite masse par multiplication de la masse volumique par la valeur de débit volumique de fluide soutiré mesuré,
- l'étape de détermination de la masse de liquide soutiré comprend une étape de correction, par exemple par un coefficient multiplicatif, de la valeur de débit volumique mesuré,
- l'étape de mesure du débit volumique de fluide soutiré est réalisé avec un débitmètre de type volumique.

L'invention concerne également un dispositif de transfert de fluide cryogénique liquéfié, par exemple de l'hydrogène liquide, comprenant un réservoir cryogénique destiné à contenir du fluide cryogénique liquéfié ayant une phase gazeuse à l'équilibre avec la phase liquide, une conduite de transfert de liquide ayant une extrémité amont reliée au réservoir et une extrémité aval destinée à être reliée un récepteur, la conduite de transfert de liquide comprenant un débitmètre volumique, le dispositif comprenant un système de pressurisation du fluide contenu dans le réservoir, un capteur de pression du fluide dans le réservoir, un capteur de température, un organe électronique de stockage et de traitement de données comprenant un microprocesseur, l'organe organe électronique étant configuré pour déterminer la masse volumique du fluide soutiré par la conduite de transfert à partir de la valeur de pression du fluide mesurée par le capteur de pression.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :

### Brève description des figures

L'invention sera mieux comprise à la lecture de la description qui va suivre donnée uniquement à titre d'exemple et faite en se référant aux dessins annexés dans lesquels :

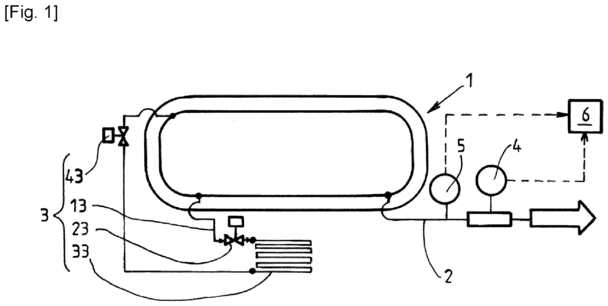

[Fig. 1] est une vue schématique et partielle illustrant un exemple de structure et de fonctionnement d'un réservoir mettant en oeuvre l'invention.

### Description détaillée

Sur toutes les figures, les mêmes références se rapportent aux mêmes éléments.

Dans cette description détaillée, les réalisations suivantes sont des exemples. Bien que la description se réfère à un ou plusieurs modes de réalisation, cela ne signifie pas que les caractéristiques s'appliquent seulement à un seul mode de réalisation. De simples caractéristiques de différents modes de réalisation peuvent également être combinées et/ou interchangées pour fournir d'autres réalisations.

La [Fig. 1] illustre un exemple de dispositif de transfert de fluide cryogénique liquéfié pouvant mettre en oeuvre l'invention. Le dispositif comprend un réservoir 1 cryogénique destiné à contenir du fluide cryogénique liquéfié ayant une phase gazeuse à l'équilibre avec la phase liquide (de l'hydrogène par exemple). Le réservoir 1 est de préférence un réservoir à double enveloppe comprenant un espace isolé thermiquement (de préférence sous vide) entre les enveloppes.

Le dispositif comprend une conduite 2 de transfert de liquide ayant une extrémité amont reliée au réservoir 1 et une extrémité aval destinée à être reliée un récepteur du fluide soutiré.

La conduite 2 de transfert de liquide comprend un débitmètre 4 volumique.

Le dispositif comprend un système 3 de pressurisation du fluide contenu dans le réservoir 1.

Ce dispositif 3 de pressurisation comprend ou est constitué par exemple d'une unité de génération de pression « PBU » (« Pressure Building Unit »). Ce dispositif 3 de pressurisation comprend par exemple une conduite 13 de pressurisation reliée en boucle au réservoir (une première extrémité reliée par exemple à la partie inférieure du réservoir 1 et une seconde extrémité reliée par exemple à la partie supérieure du réservoir. Entre ces deux extrémités la conduite 13 de pressurisation comprend un échangeur 33 de réchauffage (en échange thermique par exemple avec l'air) et un ensemble de vanne(s), par exemple deux vannes 13, 43 situées de part et d'autre de l'échangeur 33 de réchauffage.

Le transfert de liquide depuis le réservoir 1 (mobile ou fixe) vers un récepteur est réalisé au moins en partie par différence de pression. A cet effet, réservoir 1 peut être pressurisé afin d'effectuer ce transfert. La mise en pression depuis le réservoir 1 à l'équilibre thermodynamique peut être réalisée classiquement en soutirant du liquide du réservoir via l'ouverture de la vanne 13 en amont de l'échangeur 33 de réchauffage, vaporisation de ce liquide dans l'échangeur 33 de réchauffage, puis retour du gaz chaud obtenu par convection naturelle dans le ciel gazeux du réservoir via l'ouverture de la vanne 43 en aval de l'échangeur 33 de réchauffage.

Cette méthode de pressurisation augmente la pression manométrique du fluide d'une valeur déterminée (typiquement de l'ordre de 0,2 à 3bar). Cette augmentation de pression n'augmente pas significativement la température du liquide dans le réservoir. C'est-à-dire que le fluide dans le réservoir 1 passe de l'état saturé à un état de liquide sous refroidi.

Une fois le liquide pressurisé, le liquide est transvasé par différence de pression vers le récepteur (ouverture de vanne(s) appropriée(s) dans la conduite 2 de transfert.

A des fins de facturation, une mesure de débit 4 (volumique) soutiré est effectuée. La facturation devant être faite avec une mesure massique, une correction en densité de la valeur volumique lue est nécessaire.

Comme la densité du liquide dépend de sa pression de saturation, la mesure de débit volumétrique (débitmètre à turbine par exemple) n'est pas possible sans correction de la valeur de densité.

Le dispositif comprend un capteur 5 de pression du fluide dans le réservoir 1, situé par exemple sur la conduite 2 de transfert, en amont du débitmètre 4.

L'indication de la pression du fluide au moment du soutirage ne permet pas une correction fiable car le liquide n'est pas à l'équilibre thermodynamique.

Selon une particularité avantageuse, la pression dans le réservoir est mesurée ou déterminée lors de l'équilibre entre la phase gazeuse et la phase liquide. La hausse de pression manométrique provoquée par une pressurisation est détectée, lors de l'activation du système 3 de pressurisation, et/ou par détection d'une montée soudaine en pression significativement plus rapide que la montée en pression du réservoir liée aux entrées thermique (de plusieurs bars par heure pour une pressurisation par PBU vs 15 mbar/h). Le capteur 5 de pression peut ainsi détecter une hausse de la pression liée à la pressurisation en détectant par exemple une rupture (discontinuité par exemple) dans rampe de pression mesurée. Cette valeur de pression manométrique juste avant le début de la montée en pression peut être récupérée (enregistrée par exemple) par exemple en utilisant la valeur à un instant décalé temporellement par rapport à la montée en pression.

Cette valeur de pression permet de calculer ou de déterminer à l'aide d'abaque la masse volumique du liquide qui est soutiré.

La masse volumique est obtenue par exemple via un calcul et une formule D=-2.36xP +72.8 (D étant la densité en kg/m3 et P la pression en bar abs) et/ou via une tabulation ou une table de correspondance prédéterminée telle que ci-dessous :

**[Table 1]**

| Pression (MPa) | Densité du liquide (en kg/m³) |
|---|---|
| 0,10000 | 70,899 |
| 0,20000 | 67,712 |
| 0,30000 | 65,189 |
| 0,40000 | 62,949 |
| 0,50000 | 60,847 |
| 0,60000 | 58,800 |
| 0,70000 | 56,748 |
| 0,80000 | 54,632 |
| 0,90000 | 52,381 |
| 1,0000 | 49,888 |
| 1,1000 | 46, 942 |
| 1,2000 | 42,960 |

Cette valeur de masse volumique permet de corriger la valeur de débit volumique lue par le débitmètre 4.

A cet effet, le dispositif 1 peut comprendre un organe 6 électronique de stockage et de traitement de données à microprocesseur(s). Cet organe 6 électronique peut être configuré pour déterminer la masse volumique du fluide soutiré par la conduite 2 de transfert à partir de la valeur de pression du fluide mesurée par le capteur 5 de pression.

Dans le cas où le réservoir 1 est mobile, lors d'une tournée à plusieurs livraisons, l'énergie injectée lors de la livraison pour pressuriser le réservoir et le transport entre deux points de livraison augmentent la température du liquide (donc la pression saturée pour un système en équilibre).

L'invention permet de déterminer la masse volumique du liquide au moment de la livraison, qui n'est pas corrélée avec la pression manométrique lors du soutirage.

L'invention permet de corriger en masse volumique la mesure d'un débitmètre volumique pendant une livraison de liquide cryogénique.

La détermination de la masse de liquide soutiré peut comprendre le calcul de ladite masse par multiplication de la masse volumique par la valeur de débit volumique de fluide soutiré mesuré. Pour obtenir la masse de liquide, la masse volumique peut être multipliée par le volume de fluide obtenu en sommant le débit volumique de fluide soutiré mesuré pendant une durée déterminée.

Ceci permet de déterminer une quantité en masse de liquide transféré. Ceci est rendu possible même si la pression manométrique lors de cette livraison est dé-corrélée de la densité du fluide livré (le liquide étant sous refroidi).

## Revendications

1. Procédé de transfert de fluide cryogénique liquéfié, par exemple de l'hydrogène liquide, à partir d'un réservoir (1) cryogénique contenant du fluide cryogénique liquéfié ayant une phase gazeuse à l'équilibre avec la phase liquide, le transfert de fluide étant réalisé vers un récepteur au moins en partie par différence de pression entre le réservoir (1) et le récepteur de fluide, le procédé comprenant une étape de pressurisation du fluide contenu dans le réservoir (1), une étape soutirage de liquide du réservoir pressurisé, une étape de mesure du débit volumique de fluide soutiré, une étape de détermination de la masse de liquide soutiré à partir du débit volumique de fluide soutiré mesuré et de la masse volumique du fluide soutiré, **caractérisé en ce que** la masse volumique du fluide soutiré est déterminée à partir de la pression du fluide dans le réservoir (1) mesurée avant l'étape de pressurisation.

2. Procédé selon la revendication 1, **caractérisé en ce qu'**il comporte une étape de mesure de la pression du fluide dans le réservoir (1), une étape de détection d'une hausse de pression correspondant à une étape de pressurisation, la pression du fluide dans le réservoir mesurée avant l'étape de pressurisation étant une valeur de pression mesurée avant la hausse de pression détectée.

3. Procédé selon la revendication 1 ou 2, **caractérisé en ce que** la masse volumique du fluide soutiré est calculée à partir de la formule suivante : D=-2.36P +72.8 (D étant la densité en kg/m3 et P la pression en bar abs) et/ou à partir d'une table déterminée donnant la densité/masse volumique du fluide en fonction de sa pression.

4. Procédé selon l'une quelconque des revendications 1 à 3, **caractérisé en ce que** l'étape de détermination de la masse de liquide soutiré comprend le calcul de ladite masse par multiplication de la masse volumique par la valeur de débit volumique de fluide soutiré mesuré.

5. Procédé selon l'une quelconque des revendications 1 à 4, **caractérisé en ce que** l'étape de détermination de la masse de liquide soutiré comprend une étape de correction, par exemple par un coefficient multiplicatif, de la valeur de débit volumique mesuré.

6. Procédé selon l'une quelconque des revendications 1 à 5, **caractérisé en ce que** l'étape de mesure du débit volumique de fluide soutiré est réalisé avec un débitmètre de type volumique.

7. Dispositif de transfert de fluide cryogénique liquéfié, par exemple de l'hydrogène liquide, comprenant un réservoir (1) cryogénique destiné à contenir du fluide cryogénique liquéfié ayant une phase gazeuse à l'équilibre avec la phase liquide, une conduite (2) de transfert de liquide ayant une extrémité amont reliée au réservoir (1) et une extrémité aval destinée à être reliée un récepteur, la conduite (2) de transfert de liquide comprenant un débitmètre volumique, le dispositif comprenant un système (3) de pressurisation du fluide contenu dans le réservoir (1) configuré pour réaliser une pressurisation du fluide contenu dans le réservoir (1) avant soutirage, un capteur (5) de pression du fluide dans le réservoir (1), un capteur (5) de température, un organe (6) électronique de stockage et de traitement de données comprenant un microprocesseur, l'organe organe (6) électronique étant configuré pour déterminer la masse volumique du fluide soutiré par la conduite (2) de transfert à partir de la valeur de pression du fluide mesurée par le capteur (5) de pression avant la pressurisation.
